# FASCICULE DE BREVET EUROPEEN

(11) **EP 2 245 290 B1**
(45) Date de publication et mention de la délivrance du brevet: **14.11.2012**
(21) Numéro de dépôt: 09711410.2
(22) Date de dépôt: 13.02.2009
(51) Int. Cl.: F02K 1/76

(54) **SYSTEME DE COMMANDE D'UNE PLURALITE DE FONCTIONS D'UN TURBOREACTEUR**
SYSTEM ZUR STEUERUNG MEHRERER FUNKTIONEN EINES STRAHLTRIEBWERKS
SYSTEM FOR CONTROLLING A PLURALITY OF FUNCTIONS OF A TURBOJET ENGINE

(30) Priorité: 15.02.2008 FR 0850991
(43) Date de publication de la demande: 03.11.2010
(73) Titulaire: SNECMA, 75015 Paris (FR)
(72) Inventeur: BADER, Nicolas, F-77000 Vaux Le Penil (FR); STUTZ, Antoine, 28006 Madrid (ES); BOUDYAF, Rachid, F-94140 Alfortville (FR); DEGUIN, Thomas, 31200 TOULOUSE (FR)
(74) Mandataire: Joly, Jean-Jacques
(86) Numéro de dépôt international: PCT/FR2009/050230
(87) Numéro de publication internationale: WO 2009/101370

(56) Documents cités:
- EP-A- 1 588 882
- WO-A-2006/134253
- US-A- 4 979 362
- US-A1- 2004 188 211

## Description

### Arrière-plan de l'invention

L'invention concerne l'alimentation et la commande d'équipements électromécaniques d'un moteur d'aéronef et/ou de son environnement. Elle s'applique plus particulièrement aux moteurs d'avion et notamment aux moteurs à turbine à gaz de type turboréacteurs.

Par équipements électromécaniques d'un moteur d'aéronef ou de son environnement, on entend ici non seulement des équipements utiles pour le fonctionnement même du moteur, mais également des équipements associés à la nacelle du moteur. De tels équipements sont par exemple des dispositifs électromécaniques permettant d'actionner diverses fonctions du moteur lorsque le moteur est en fonctionnement ou à l'arrêt, comme notamment des dispositifs d'actionnement d'inverseurs de poussée pour un moteur d'avion à turbine à gaz ou des dispositifs d'actionnement de capots pour la maintenance (ouverture/fermeture des capots).

Chaque dispositif d'actionnement électromécanique tel que mentionné ci-dessus comprend généralement au moins un vérin, un moteur électrique pour actionner ce vérin et une électronique de commande destinée à commander le moteur électrique et dimensionnée en fonction des besoins propres du dispositif d'actionnement. Un tel agencement est décrit dans le document WO 2006/134253 pour différents dispositifs d'actionnement équipant une nacelle de turboréacteur.

Par ailleurs, la tendance actuelle est de commander de plus en plus de fonctions d'un moteur d'aéronef au moyen de tels dispositifs d'actionnement électromécaniques.

Par conséquent, il existe un besoin de simplifier l'alimentation et la commande de ces dispositifs d'actionnement afin de réduire les coûts de fabrication ainsi que la complexité de conception notamment en termes d'encombrement, de masse et de dimensionnement.

Dans le domaine automobile, il a été proposé dans le document EP 1 588 882 d'utiliser un moteur électrique pour actionner l'un ou l'autre de deux panneaux de toit ouvrants via un système de transmission mécanique comprenant un mécanisme de commutation entre deux arbres de sortie.

### Objet et résumé de l'invention

A cette fin, la présente invention propose un système de commande d'une pluralité de fonctions d'un turboréacteur, chaque fonction étant associée à un dispositif d'actionnement, le système comportant :
- un moteur électrique adapté à fournir de l'énergie mécanique à chacun des dispositifs d'actionnement ;
- un boîtier électronique de commande du moteur électrique ; et
- au moins un dispositif d'aiguillage interposé entre le moteur et les dispositifs d'actionnement, le ou les dispositifs d'aiguillage permettant de distribuer sélectivement vers l'un des dispositifs d'actionnement l'énergie mécanique fournie par le moteur électrique.

L'invention permet ainsi de mutualiser les électroniques de commande ainsi que les moteurs électriques d'une pluralité de dispositifs d'actionnement électromécaniques associés respectivement à des fonctions distinctes du turboréacteur qui ne sont pas destinées à fonctionner simultanément. Par mutualiser, on entend ici utiliser la même électronique de commande et le même moteur électrique pour l'ensemble des dispositifs d'actionnement électromécaniques.

Dans l'exemple de fonctions comprenant un inverseur de poussée et un capot de maintenance, l'invention permet d'avoir un système de commande commun pour actionner sélectivement l'inverseur de poussée durant le freinage de l'aéronef, et l'ouverture du capot de maintenance.

En outre, l'invention permet avantageusement de profiter d'une électronique de commande et d'un moteur électrique parfaitement compatibles entre eux et dimensionnés pour actionner d'une part une fonction dite principale, très consommatrice en terme de puissance mais sur une durée cependant très limitée (telle l'inverseur de poussée), et d'autre part une ou plusieurs fonctions dites secondaires nécessitant moins de puissance pour être actionnées (telle un capot de maintenance).

La mutualisation des électroniques de commande et des moteurs électriques permise par l'invention conduit donc à une réduction en termes de coûts et de masse mais également en termes d'encombrement et de complexité de conception. En effet, conformément à l'invention, un seul moteur électrique et un seul boîtier électronique de commande étant nécessaires pour commander une pluralité de fonctions, le besoin en harnais de transmission de puissance électrique est limité.

Par ailleurs, il est possible de prévoir pour une fonction principale du turboréacteur, une électronique de commande et un moteur électrique de secours et ainsi de faire profiter de cette redondance à des fonctions secondaires n'en bénéficiant pas habituellement.

Dans un mode de réalisation particulier de l'invention, dans lequel le dispositif d'aiguillage comporte une entrée apte à recevoir l'énergie mécanique fournie par le moteur et deux sorties, le dispositif d'aiguillage est apte à aiguiller l'énergie mécanique reçue en entrée vers l'une ou l'autre des sorties.

Dans une première variante de réalisation dans laquelle le système de commande selon l'invention comporte un unique dispositif d'aiguillage, chaque sortie du dispositif d'aiguillage est reliée à un dispositif d'actionnement.

Dans cette première variante, le système de commande selon l'invention permet de commander au plus deux fonctions.

Dans une seconde variante de réalisation dans laquelle le système de commande comporte au moins deux dispositifs d'aiguillage, l'une des sorties de l'un des dispositifs d'aiguillage est reliée à l'entrée d'un autre dispositif d'aiguillage.

Dans cette seconde variante de réalisation, la mutualisation des électroniques de commande et des moteurs d'au moins trois fonctions est permise.

Dans un mode de réalisation particulier de l'invention, au moins l'un des dispositifs d'aiguillage est apte à aiguiller l'énergie mécanique reçue en entrée vers l'une de ses sorties sur réception d'un signal électrique de commande et vers l'autre sortie en l'absence de signal électrique de commande.

Notamment, en l'absence de signal, le dispositif d'aiguillage peut être adapté à aiguiller l'énergie mécanique vers le dispositif d'actionnement associé à une fonction principale. De la sorte, la commande de la fonction principale est privilégiée par défaut.

Dans un autre mode de réalisation particulier de l'invention, au moins un des dispositifs d'aiguillage est apte à aiguiller l'énergie mécanique reçue sur l'entrée vers l'une ou l'autre de ses sorties en fonction d'une commande mécanique reçue.

De façon avantageuse, le boîtier d'électronique de commande du système selon l'invention peut être apte à adapter la puissance électrique délivrée au moteur suivant la fonction à commander.

De cette sorte, l'énergie mécanique fournie par le moteur au dispositif d'actionnement sélectionné par le dispositif d'aiguillage est conforme aux besoins de la fonction associée à ce dispositif d'actionnement.

Le système selon l'invention peut également comporter des moyens pour informer le boîtier électronique de commande du moteur, du dispositif d'actionnement vers lequel l'énergie est distribuée.

Cette information peut notamment permettre au boîtier électronique de commande de dimensionner la puissance à délivrer au moteur selon la fonction commandée, notamment lorsque le dispositif d'aiguillage est commandé par une commande mécanique.

Cette information peut également constituer un moyen de contrôler que l'énergie mécanique est bien aiguillée vers le bon dispositif d'actionnement et ainsi renforcer la sécurité du système.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente un système de commande conforme à l'invention dans son environnement, dans un premier mode de réalisation dans lequel ce système permet de commander deux fonctions d'un turboréacteur ;
- les figures 2A et 2B illustrent un exemple de fonctionnement d'un dispositif d'aiguillage pouvant être utilisé dans le système de commande représenté sur la figure 1 ; et
- la figure 3 représente un système de commande conforme à l'invention dans son environnement, dans un deuxième mode de réalisation dans lequel ce système permet de commander trois fonctions d'un turboréacteur.

### Description détaillée de deux modes de réalisation de l'invention

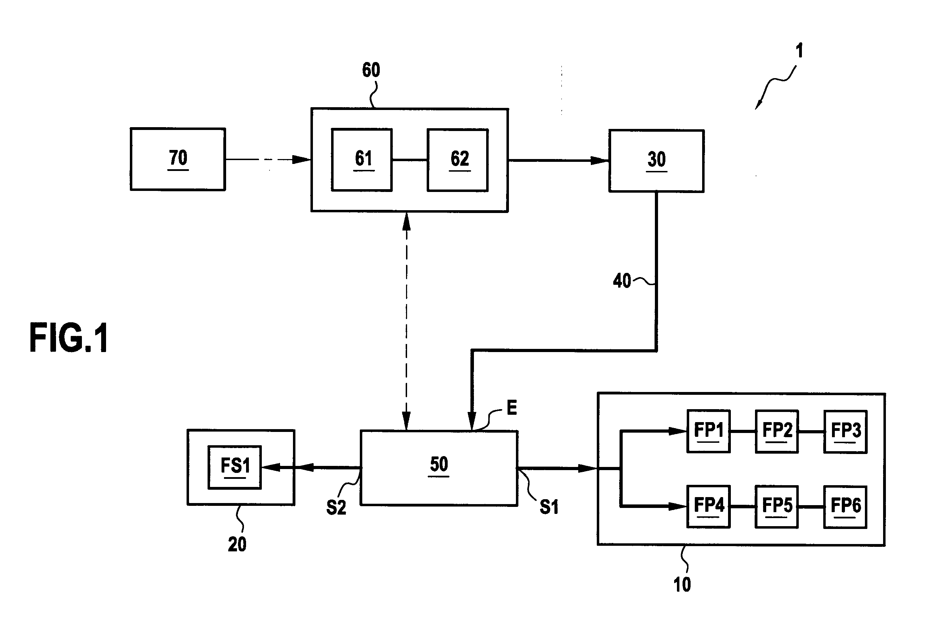

La figure 1 représente un système de commande 1 conforme à l'invention dans un premier mode de réalisation. Dans ce premier mode de réalisation, on envisage la commande de deux fonctions distinctes d'un turboréacteur, à savoir ici, un inverseur de poussée (fonction dite principale) et un capot de maintenance (fonction dite secondaire) du turboréacteur.

Toutefois l'invention peut également s'appliquer à un nombre de fonctions supérieur à deux (comme décrit ultérieurement dans un deuxième mode de réalisation de l'invention) et à d'autres types de fonctions, à condition que celles-ci ne soient pas destinées à être actionnées simultanément.

A chaque fonction est associé un dispositif d'actionnement électromécanique pouvant comporter un ou plusieurs actionneurs. Ainsi, à l'inverseur de poussée est associé un dispositif d'actionnement électromécanique 10 comportant six vérins FP1,...,FP6 reliés par des arbres de transmission flexibles (trois vérins par porte de l'inverseur de poussée dans l'exemple décrit ici). Un exemple d'inverseur de poussée à actionnement électromécanique est notamment décrit dans le document EP 0 843 089. De même, au capot de maintenance est associé un dispositif d'actionnement électromécanique 20 comprenant un vérin FS1.

Le système de commande 1 comporte un moteur électrique 30, adapté à fournir de l'énergie mécanique à l'un ou l'autre des dispositifs d'actionnement 10 et 20 de l'inverseur de poussée et du capot de maintenance.

A cette fin, l'énergie mécanique fournie par le moteur 30 est transmise par l'intermédiaire d'un arbre de transmission mécanique 40 à un dispositif d'aiguillage 50 interposé entre le moteur 30 et les dispositifs d'actionnement 10 et 20. L'énergie mécanique est ensuite distribuée sélectivement par le dispositif d'aiguillage 50 vers l'un ou l'autre des dispositifs d'actionnement suivant la fonction à actionner.

Le système de commande 1 comporte également un boîtier électronique de commande 60 du moteur électrique 30. Ce boîtier électronique de commande 60 est adapté à piloter le moteur électrique 30 suivant la fonction à commander.

Il comprend notamment un module de puissance 61 (aussi appelée électronique de puissance) adapté à générer une puissance électrique destinée à alimenter le moteur électrique 30. Il comprend également des moyens de contrôle 62 de la puissance générée par le module de puissance 61 afin d'adapter la puissance électrique délivrée au moteur 30 suivant la fonction à commander.

En effet, lors de la conception du système de commande 1, la capacité de puissance du module 61 aura été avantageusement dimensionnée par rapport à la fonction nécessitant le plus de puissance pour pouvoir être actionnée (fonction principale), à savoir ici l'inverseur de poussée. De cette sorte, le module de puissance 61 sera également apte à fournir une puissance électrique suffisante pour pouvoir actionner la fonction nécessitant le moins de puissance pour pouvoir être actionnée (fonction secondaire), à savoir ici le capot de maintenance.

Par conséquent, la capacité de puissance du module 61 sera surdimensionnée par rapport à cette fonction secondaire. Afin de ne pas endommager la fonction secondaire, les moyens de contrôle 62 permettent d'adapter la puissance électrique délivrée au moteur suivant la fonction à commander, en régulant la tension et l'intensité du courant d'alimentation fourni au moteur 30.

La tension et l'intensité du courant d'alimentation à fournir au moteur 30 pourront être déterminées notamment à partir de mesures de courant et de tension préétablies pour chaque fonction à commander. Le moteur électrique 30 peut par ailleurs disposer d'un capteur (non représenté sur la figure) informant le boîtier électronique de commande 60 du couple effectivement appliqué par le moteur électrique 30, afin de réguler de façon précise la puissance électrique délivrée au moteur 30.

Pour identifier la fonction à commander et appliquer la tension et l'intensité de courant appropriées, le boîtier électronique de commande 60 peut utiliser des informations reçues du dispositif de régulation pleine autorité 70 de l'avion aussi connu sous le nom de FADEC (Full Authority Digital Engine Control). De telles informations sont reçues sous forme de commandes numériques, comprenant par exemple des paramètres de fonctionnement du turboréacteur permettant au boîtier électronique de commande 60 d'identifier la fonction à commander ou en variante un identifiant de la fonction à commander.

Ainsi, conformément à l'invention, on utilise un seul boîtier électronique de commande 60 et un seul moteur électrique 30 pour actionner les deux dispositifs d'actionnement 10 et 20 respectifs de l'inverseur de poussée et du capot de maintenance. Ces deux fonctions n'étant pas destinées à opérer simultanément, le dispositif d'aiguillage 50 doit distribuer sélectivement à l'un ou l'autre des dispositifs d'actionnement associés à ces fonctions l'énergie fournie par le moteur électrique 30.

Pour cela, on considère un dispositif d'aiguillage 50 comportant une entrée E apte à recevoir l'énergie mécanique fournie par le moteur électrique 30 par l'intermédiaire de l'arbre de transmission 40, et deux sorties S1 et S2 reliées respectivement aux dispositifs d'actionnement 10 et 20.

Dans l'exemple décrit ici, pour aiguiller vers l'une ou l'autre des deux sorties l'énergie reçue en entrée, le dispositif d'aiguillage 50 met en oeuvre un mécanisme de type embrayage. De façon connue, un mécanisme d'embrayage permet de solidariser deux pièces (par exemple deux arbres de transmission) pour communiquer à l'une d'elle le mouvement de rotation de l'autre. Ainsi, un tel mécanisme permettra soit de coupler l'entrée E avec la sortie S1, soit de coupler l'entrée E avec la sortie S2.

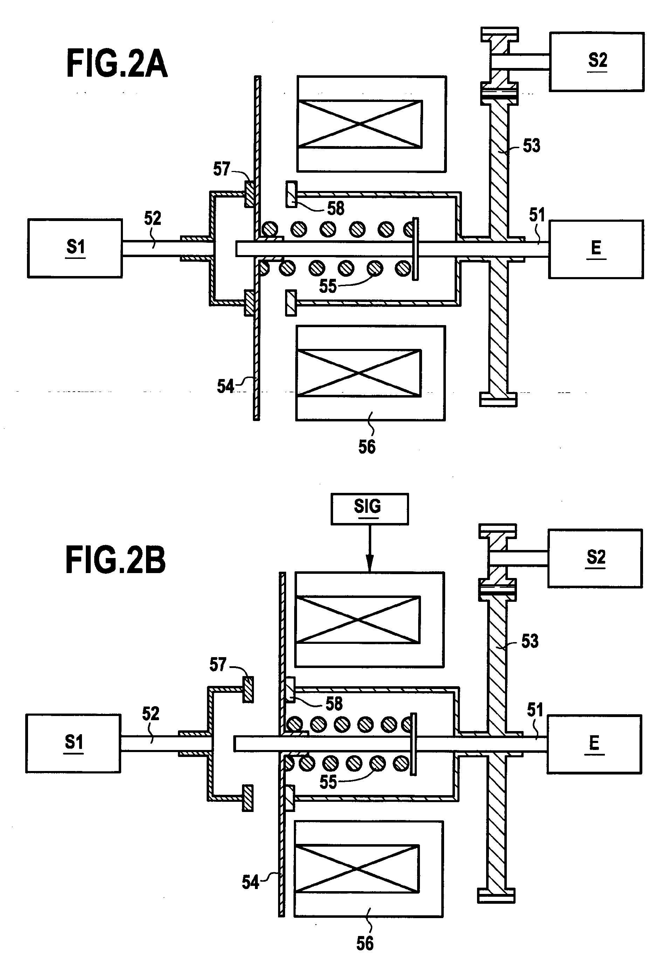

Un exemple d'un dispositif d'aiguillage 50 implémentant un tel mécanisme est représenté sur les figures 2A et 2B.

Le dispositif d'aiguillage 50 représenté sur ces figures aiguille l'énergie mécanique reçue en entrée E vers l'une ou l'autre des sorties S1 ou S2 en fonction de la réception ou non d'un signal électrique de commande. Ce signal de commande peut provenir par exemple du FADEC 70 de l'avion ou du boîtier électronique de commande 60.

De façon connue, le dispositif d'aiguillage 50 comprend, pour assurer un tel fonctionnement :
- un arbre 51 dit d'entrée, couplé à l'entrée E ;
- un premier arbre 52 de sortie, couplé à la sortie S1 ;
- un second arbre 53 de sortie, couplé à la sortie S2 ;
- une plaque métallique 54 solidaire en rotation de l'arbre d'entrée 51 et mobile en translation ;
- un ressort de rappel 55, relié à une extrémité à l'arbre d'entrée 51 et à l'autre extrémité à la plaque métallique 54 ; et
- un électroaimant 56 comportant un solénoïde à l'intérieur duquel un noyau a été placé.

De façon préférentielle, lorsque le dispositif d'aiguillage 50 ne reçoit pas de signal de commande électrique, il distribue l'énergie mécanique reçue du moteur électrique 30 vers le dispositif d'actionnement 10 associée à la fonction principale (S1), à savoir ici l'inverseur de poussée. Inversement, lorsque le dispositif d'aiguillage 50 reçoit un signal de commande électrique SIG, il distribue l'énergie mécanique fournie par le moteur électrique 30 vers le dispositif d'actionnement 20 associée à la fonction secondaire (S2), à savoir ici le capot de maintenance. De cette sorte, l'alimentation et la commande de la fonction principale sont privilégiées par défaut.

A cet effet, le ressort de rappel 55 a une longueur au repos telle que lorsque le solénoïde de l'électroaimant 56 n'est pas alimenté en courant électrique (i.e., lorsque le dispositif d'aiguillage 50 ne reçoit pas de signal électrique de commande), il permet de plaquer la plaque métallique 54 contre un disque 57 de friction. Le disque 57 est solidaire en rotation avec le premier arbre de sortie 52 (cf. figure 2A). Ainsi, lorsque la plaque métallique 54 est mise en rotation par le moteur électrique 30 (via l'arbre d'entrée 51), elle transmet par friction ce mouvement de rotation au premier arbre de sortie 52, par l'intermédiaire du disque 57. L'énergie mécanique fournie par le moteur électrique 30 en entrée E est ainsi transmise par friction vers la sortie S1 (uniquement) du dispositif d'aiguillage 50, de sorte à être délivrée au dispositif d'actionnement 10 de l'inverseur de poussée. Le dispositif d'actionnement 10 distribue alors l'énergie mécanique reçue aux différents actionneurs FP1,...,FP6, ce qui permet d'activer l'inverseur de poussée. Cette distribution est réalisée par l'intermédiaire de flexibles de transmission, de façon connue de l'homme du métier et non détaillée ici.

Lorsque le solénoïde de l'électroaimant 56 est alimenté (cf. figure 2B) par un signal électrique de commande SIG, il attire la plaque métallique 54 à lui. Celle-ci est alors plaquée contre un disque 58 de friction. Le disque 58 est solidaire en rotation avec le second arbre de sortie 53. Ainsi, lorsque la plaque métallique 54 est mise en rotation par le moteur électrique 30 (via l'arbre d'entrée 51), elle transmet par friction ce mouvement de rotation au second arbre de sortie 53, par l'intermédiaire du disque 58. L'énergie mécanique fournie par le moteur électrique 30 en entrée E est ainsi transmise par friction vers la sortie S2 (uniquement) du dispositif d'aiguillage 50, de sorte à être délivrée au dispositif d'actionnement 20 du capot de maintenance. Le dispositif d'actionnement 20 transmet ensuite l'énergie mécanique reçue à l'actionneur FS1, par l'intermédiaire d'un flexible de transmission, ce qui actionne l'ouverture par exemple du capot de maintenance.

Dans l'exemple décrit ici, le dispositif d'aiguillage 50 met en oeuvre un mécanisme d'embrayage par friction. Toutefois, d'autres types de mécanismes d'embrayage peuvent bien sûr être considérés, comme par exemple un mécanisme d'embrayage par crabotage, etc.

Dans un autre mode de réalisation, non représenté sur les figures, le dispositif d'aiguillage 50 aiguille l'énergie mécanique fournie par le moteur électrique 30 et reçue en entrée E vers l'une ou l'autre des sorties S1 et S2 en fonction d'une commande mécanique.

Cette commande mécanique peut provenir par exemple d'un levier qui, lorsqu'il se trouve dans une position A, permet de solidariser en rotation l'arbre d'entrée avec le premier arbre de sortie (et donc de coupler l'entrée E avec la sortie S1), et lorsqu'il se trouve dans une position B de solidariser en rotation l'arbre d'entrée avec le second arbre de sortie (et donc de coupler l'entrée E avec la sortie S2).

De façon similaire au signal de commande électrique, une position par défaut du levier peut être envisagée, de sorte que le dispositif d'aiguillage distribue par défaut l'énergie mécanique au dispositif d'actionnement de l'inverseur de poussée. Le changement de position du levier (ex. manuellement) vers l'autre position permettra alors de distribuer l'énergie mécanique vers le dispositif d'actionnement du capot de maintenance. La fermeture du capot de maintenance pourra être coordonnée avec le basculement du levier dans sa position par défaut.

Selon une caractéristique avantageuse, un capteur de retour de position (non représenté sur la figure 1), localisé par exemple sur le dispositif d'aiguillage 50, permet d'informer le FADEC 70 de l'avion ou le boîtier électronique de commande 60 du dispositif d'actionnement vers lequel est distribuée l'énergie mécanique (i.e., de la fonction activée).

Ceci permet notamment de contrôler que le dispositif d'aiguillage 50 distribue l'énergie mécanique vers le bon dispositif d'actionnement.

Par ailleurs, lorsque le dispositif d'aiguillage 50 est commandé par une commande mécanique pour sélectionner le dispositif d'actionnement vers lequel transmettre l'énergie mécanique et que cette commande ne provient pas ou n'est pas connue de celui-ci, cette information peut permettre au boîtier 60 d'adapter la puissance délivrée au moteur 30 selon la fonction associée au dispositif d'actionnement sélectionné.

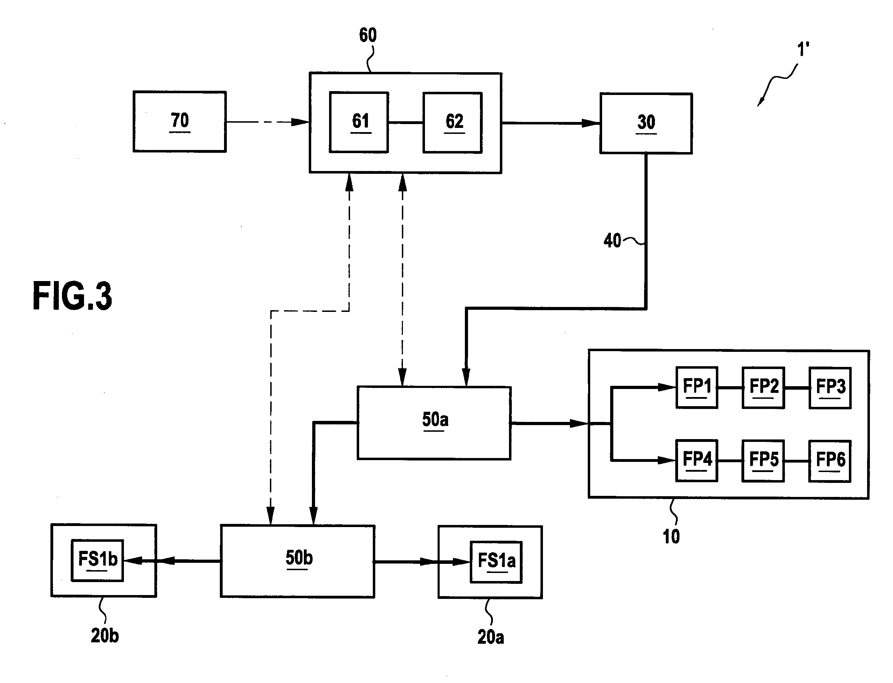

Comme mentionné précédemment, l'invention s'applique également à la commande de plus de deux fonctions d'un turboréacteur. Ainsi, nous allons maintenant décrire en référence à la figure 3, un deuxième mode de réalisation de l'invention, dans lequel on envisage la commande de trois fonctions distinctes d'un turboréacteur non destinées à fonctionner simultanément. Ces fonctions sont dans cet exemple un inverseur de poussée (fonction principale) et deux capots de maintenance, tels par exemple un capot moteur et un capot fan (fonctions secondaires).

Chaque fonction est associée à un dispositif d'actionnement. Ainsi, l'inverseur de poussée est associé au dispositif d'actionnement 10, et les deux capots de maintenance sont associés respectivement aux dispositifs d'actionnement 20a et 20b.

Le système de commande 1' selon l'invention comporte un moteur électrique 30, un boîtier électronique de commande 60 et un FADEC 70, similaires à ceux décrits précédemment dans le premier mode de réalisation.

Le système de commande 1' comporte également un premier et un second dispositifs d'aiguillage 50a et 50b interposés entre le moteur 30 et les dispositifs d'actionnement 10, 20a et 20b. Les dispositifs d'aiguillage 50a et 50b sont similaires au dispositif d'aiguillage 50 décrit dans le premier mode de réalisation.

Ainsi, le premier dispositif d'aiguillage 50a comprend une entrée reliée au moteur électrique 30 par l'intermédiaire de l'arbre de transmission 40, ainsi que deux sorties, reliées respectivement au dispositif d'actionnement 10 et à l'entrée du second dispositif d'aiguillage 50b. Le premier dispositif d'aiguillage 50a est ainsi adapté à distribuer l'énergie mécanique reçue du moteur électrique 30 vers le dispositif d'actionnement 10 ou vers le second dispositif d'aiguillage 50b (c'est-à-dire vers le dispositif d'actionnement 20a ou vers le dispositif d'actionnement 20b), en fonction par exemple d'un signal de commande électrique ou d'une commande mécanique comme décrit dans le premier mode de réalisation de l'invention.

Le second dispositif d'aiguillage 50b comprend une entrée reliée à l'une des sorties du premier dispositif d'aiguillage 50a et deux sorties reliées respectivement au dispositif d'actionnement 20a et au dispositif d'actionnement 20b. Le second dispositif d'aiguillage 50b est ainsi adapté à distribuer l'énergie mécanique reçue du moteur électrique 30 (via le dispositif d'aiguillage 50a) vers le dispositif d'actionnement 20a ou vers le dispositif d'actionnement 20b, en fonction par exemple d'un signal de commande électrique ou d'une commande mécanique comme décrit dans le premier mode de réalisation de l'invention.

## Revendications

1. Système de commande (1,1') d'une pluralité de fonctions distinctes d'un turboréacteur qui ne sont pas destinées à fonctionner simultanément, chaque fonction étant associée à un dispositif d'actionnement (10,20,20a,20b), ledit système comportant :
- un moteur électrique (30) adapté à fournir de l'énergie mécanique à chacun des dispositifs d'actionnement ;
- un boîtier électronique de commande (60) du moteur électrique ; et
- au moins un dispositif d'aiguillage (50,50a,50b) interposé entre le moteur et les dispositifs d'actionnement, le ou les dispositifs d'aiguillage permettant de distribuer sélectivement vers l'un des dispositifs d'actionnement l'énergie mécanique fournie par le moteur électrique.

2. Système (1,1') selon la revendication 1, dans lequel chaque dispositif d'aiguillage (50) comporte une entrée (E) apte à recevoir l'énergie mécanique fournie par le moteur (30) et deux sorties (S1,S2), le dispositif d'aiguillage étant apte à aiguiller l'énergie mécanique reçue en entrée vers l'une ou l'autre des sorties.

3. Système (1,1') selon la revendication 2 comportant un unique dispositif d'aiguillage (50), chaque sortie (S1,S2) du dispositif d'aiguillage étant reliée à un dispositif d'actionnement (10,20).

4. Système (1,1') selon la revendication 2 comportant au moins deux dispositifs d'aiguillage (50a,50b), l'une des sorties de l'un des dispositifs d'aiguillage (50a) étant reliée à l'entrée d'un autre dispositif d'aiguillage (50b).

5. Système (1,1') selon l'une quelconque des revendications 2 à 4, dans lequel au moins l'un des dispositifs d'aiguillage (50,50a,50b) est apte à aiguiller l'énergie mécanique reçue en entrée (E) vers l'une de ses sorties (S2) sur réception d'un signal électrique de commande et vers l'autre sortie (S1) en l'absence de signal électrique de commande.

6. Système (1,1') selon l'une quelconque des revendications 2 à 5 dans lequel au moins l'un des dispositifs d'aiguillage (50,50a,50b) est apte à aiguiller l'énergie mécanique reçue sur l'entrée (E) vers l'une ou l'autre de ses sorties (S1,S2) en fonction d'une commande mécanique reçue.

7. Système (1,1') selon l'une quelconque des revendications 1 à 6, dans lequel le boîtier d'électronique de commande (60) est apte à adapter la puissance électrique délivrée au moteur (30) suivant la fonction à commander.

8. Système (1,1') selon l'une quelconque des revendications 1 à 7, comportant des moyens pour informer le boîtier électronique de commande (60) du moteur du dispositif d'actionnement vers lequel l'énergie est distribuée.

9. Système selon l'une quelconque des revendications 1 à 8 dans lequel les fonctions commandées par le système comprennent au moins :
- un inverseur de poussée ; et
- un capot de maintenance

## Claims

1. A control system (1, 1') for controlling a plurality of distinct functions of a turbojet engine that are not to be operated simultaneously, each function being associated with a respective actuation device (10, 20, 20a, 20b), said system comprising:
· an electric motor (30) adapted to supply mechanical energy to each of the actuation devices;
· an electronic control unit (60) for the electric motor; and
· at least one switching device (50, 50a, 50b) interposed between the motor and the actuation devices, the switching device(s) serving to distribute the mechanical energy supplied by the electric motor selectively to one of the actuation devices.

2. A system (1, 1') according to claim 1, in which each switching device (50) has an inlet (E) suitable for receiving the mechanical energy supplied by the motor (30) and two outlets (S1, S2), the switching device being suitable for switching the mechanical energy it receives at its inlet to one or the other of the outlets.

3. A system (1, 1') according to claim 2, including a single switching device (50) , each outlet (S1, S2) of the switching device being connected to a respective actuation device (10, 20).

4. A system (1, 1') according to claim 2, including at least two switching devices (50a, 50b), one of the outlets of one of the switching devices (50a) being connected to the inlet of the other switching device (50b).

5. A system (1, 1') according to any one of claims 2 to 4, wherein at least one of the switching devices (50, 50a, 50b) is suitable for switching the mechanical energy it receives at its inlet (E) to one of its outlets (S2) on receiving an electric command signal and to the other outlet (S1) in the absence of an electric command signal.

6. A system (1, 1') according to any one of claims 2 to 5, wherein at least one of the switching devices (50, 50a, 50b) is suitable for switching the mechanical energy it receives at its inlet (E) to one or the other of its outlets (S1, S2) as a function of a received mechanical command.

7. A system (1, 1') according to any one of claims 1 to 6, wherein the electronic control unit (60) is suitable for adapting the electrical power delivered to the motor (30) depending on the function that is to be controlled.

8. A system (1, 1') according to any one of claims 1 to 7, including means for informing the electronic control unit (60) of the motor about which actuation device is having energy distributed thereto.

9. A system according to any one of claims 1 to 8, wherein the functions controlled by the system comprise at least:
· a thrust reverser; and
· a maintenance cover.

## Patentansprüche

1. System zur Steuerung (1, 1') einer Vielzahl von unterschiedlichen Funktionen eines Turbostrahltriebwerks, die nicht dazu bestimmt sind, gleichzeitig zu arbeiten, wobei jede Funktion einer Betätigungsvorrichtung (10, 20, 20a, 20b) zugeordnet ist, wobei das System umfaßt:
- einen Elektromotor (30), der dazu ausgelegt ist, an jede der Betätigungsvorrichtungen mechanische Energie zu liefern,
- eine elektronische Einheit zur Steuerung (60) des Elektromotors und
- wenigstens eine Lenkungsvorrichtung (50, 50a, 50b), die zwischen dem Motor und den Betätigungsvorrichtungen zwischengeschaltet ist, wobei die Lenkungsvorrichtung oder -vorrichtungen ermöglichen, die durch den Elektromotor gelieferte mechanische Energie selektiv zu einer der Betätigungsvorrichtungen zu leiten.

2. System (1, 1') nach Anspruch 1, wobei jede Lenkungsvorrichtung (50) einen Eingang (E), der geeignet ist, die durch den Motor (30) gelieferte mechanische Energie aufzunehmen, sowie zwei Ausgänge (S1, S2) umfaßt, wobei die Lenkungsvorrichtung geeignet ist, die eingangsseitig aufgenommene mechanische Energie zu dem einen oder anderen der Ausgänge zu lenken.

3. System (1, 1') nach Anspruch 2, umfassend eine einzige Lenkungsvorrichtung (50), wobei jeder Ausgang (S1, S2) der Lenkungsvorrichtung mit einer Betätigungsvorrichtung (10, 20) verbunden ist.

4. System (1, 1') nach Anspruch 2, umfassend wenigstens zwei Lenkungsvorrichtungen (50a, 50b), wobei einer der Ausgänge von einer der Lenkungsvorrichtungen (50a) mit dem Eingang einer weiteren Lenkungsvorrichtung (50b) verbunden ist.

5. System (1, 1') nach einem der Ansprüche 2 bis 4, wobei wenigstens eine der Lenkungsvorrichtungen (50, 50a, 50b) geeignet ist, die am Eingang (E) aufgenommene mechanische Energie bei Empfang eines elektrischen Steuersignals zu einem ihrer Ausgänge (S2) und bei Ausbleiben eines elektrischen Steuersignals zu dem anderen Ausgang (S1) zu lenken.

6. System (1, 1') nach einem der Ansprüche 2 bis 5, wobei wenigstens eine der Lenkungsvorrichtungen (50, 50a, 50b) geeignet ist, die am Eingang (E) aufgenommene mechanische Energie in Abhängigkeit eines empfangenen mechanischen Befehls zu dem einen oder anderen ihrer Ausgänge (S1, S2) zu lenken.

7. System (1, 1') nach einem der Ansprüche 1 bis 6, wobei die Steuerelektronikeinheit (60) geeignet ist, die dem Motor (30) bereitgestellte elektrische Leistung entsprechend der zu steuernden Funktion anzupassen.

8. System (1, 1') nach einem der Ansprüche 1 bis 7, umfassend Mittel, um die elektronische Einheit zur Steuerung (60) des Motors über die Betätigungsvorrichtung, zu der die Energie geleitet wird, zu informieren.

9. System nach einem der Ansprüche 1 bis 8, wobei die durch das System gesteuerten Funktionen wenigstens umfassen:
- einen Schubumkehrer und
- eine Wartungshaube.
